Europäisches Patentamt

European Patent Office

Office européen des brevets

(11) Veröffentlichungsnummer: **0 310 053**
**A2**

## (12) EUROPÄISCHE PATENTANMELDUNG

(21) Anmeldenummer: 88116049.3

(22) Anmeldetag: 29.09.88

(51) Int. Cl.⁴ **G01N 31/00**

(30) Priorität: 30.09.87 DE 3732888

(43) Veröffentlichungstag der Anmeldung:
05.04.89 Patentblatt 89/14

(84) Benannte Vertragsstaaten:
AT BE CH ES FR GB IT LI LU NL SE

(71) Anmelder: **MESSER GRIESHEIM GMBH**
**Hanauer Landstrasse 330**
**D-6000 Frankfurt/Main 1(DE)**

(72) Erfinder: **Gährs, Hans Jasper, Dr.**
**Novalisstrasse 12**
**D-4000 Düsseldorf(DE)**

(54) Verfahren zum Bestimmen von Wasserstoffkonzentrationen.

(57) Zur Bestimmung der Wasserstoffkonzentration einer Flüssigkeit wird ein Teilstrom der Flüssigkeit mit einem sauerstoffhaltigen Strom gemischt und in einem Katalysator zu Wasser oxidiert. Die hierbei verbrauchte Sauerstoffmenge ist ein Maß für die Wasserstoffkonzentration.

EP 0 310 053 A2

## Verfahren zum Bestimmen von Wasserstoffkonzentrationen

Die Erfindung betrifft ein Verfahren zum Bestimmen von in Flüssigkeiten gelösten Wasserstoffkonzentrationen.

Im Trinkwasserbereich gewinnen wasserstoffzehrende biologische Aufbereitungsmethoden, z.B. Denitrifikation mit auto-lithothropen Bakterien, an Bedeutung. Dazu werden zuverlässige Meßmethoden für den im Wasser gelösten Wasserstoff benötigt. Hierzu ist es bekannt, Wasserstoffelektroden einzusetzen. Die damit erzielten Meßergebnisse sind nicht immer befriedigend.

Aufgabe der Erfindung ist die Schaffung einer Methode, mit der in zuverlässiger und reproduzierbarer Weise Wasserstoffkonzentrationen schnell und genau gemessen werden können.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Gemäß der Erfindung wird die Wasserstoffkonzentrationsmessung zurückgeführt auf eine Messung der Sauerstoffkonzentration, in dem der gelöste Wasserstoff vollständig zu Wasser oxidiert und die dazu benötigte Sauerstoffmenge bestimmt wird. Zur Sicherstellung der vollständigen Oxidation werden geeignete Katalysatoren eingesetzt. Geeignet sind besonders Metallkatalysatoren - wie Nickel und Palladium -, die auf einem organischen Trägermaterial fixiert sind.

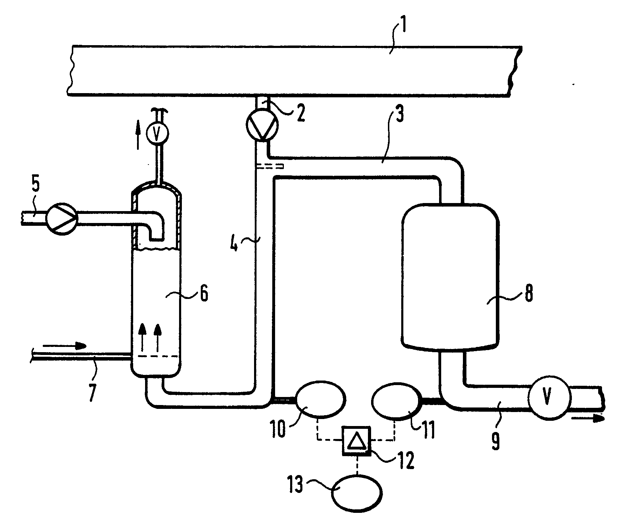

In der Zeichnung ist ein Ausführungsbeispiel der Erfindung dargestellt.

Durch eine Hauptleitung 1 strömt eine Flüssigkeit, in der Wasserstoff gelöst ist. Anstelle der Hauptleitung 1 kann auch ein Becken, ein Behälter oder ein sonstiges Gefäß treten. Von dieser Hauptleitung 1 wird ein Teilstrom in die Teilleitung 2 abgezweigt, die mit einer Mischleitung 3 in Verbindung steht. An die Mischleitung 3 angeschlossen ist ferner eine Teilleitung 4. In die Teilleitung 4 wird über den Zulauf 5 eine Flüssigkeit eingeleitet, die in einem Behälter 6 mit durch die Leitung 7 einströmenden Sauerstoff angereichert wird.

Es wird jeweils soviel Sauerstoff zugeführt, daß die Reaktion bei einem überstöchiometrischen Verhältnis stattfindet. Anstelle von Sauerstoff kann auch Luft oder ein anderes Sauerstoffgemisch verwendet werden.

Die Mischleitung 3 mündet in einen Katalysator 8 in dem die Oxidation des Wasserstoffes mit dem Sauerstoff zu Wasser stattfindet. Die Flüssigkeit tritt über den Abfluß 9 aus.

In der Leitung 4 und im Abfluß 9 sind je ein Sauerstoffmeßgerät 10 bzw. 11 angeordnet. Die durch die Reaktion im Katalysator entstandene Differenz im Sauerstoffgehalt der Flüssigkeiten in der Leitung 4 und im Abfluß 9 wird über einen Verstärker 12 einem Anzeige- und Steuergerät 13 zugeleitet.

Die Differenz ist ein Maßstab für den Wasserstoffanteil in der Flüssigkeit der Hauptleitung 1. Enthält die Hauptleitung z.B. 10 mg/l $H_2$ in gelöster Form, und sind die Ströme in den Teilleitungen 2 und 4 gleich und konstant, so würde eine Anreicherung der Flüssigkeit im Behälter 6 auf 100 mg/l Sauerstoff ausreichen um den Wasserstoff im Katalysator 8 vollständig umzusetzen. Bekanntlich benötigt man 80 mg $O_2$ um 10 mg $H_2$ zu 90 mg $H_2O$ umzusetzen.

Wichtig ist dabei, daß das ganze System geschlossen ist und unter einem solchen Druck gehalten wird, daß kein Ausgasen der beteiligten Gase stattfindet. Auch muß die Flüssigkeit in der Leitung 4 frei von Wasserstoff und die in der Leitung 2 frei von Sauerstoff sein.

Der benötigte Systemdruck ist z.B. vorgegeben durch die Konzentration an gelöstem Wasserstoff. Bei Normalbedingungen kann Wasserstoff nur bis zum Sättigungswert 1,7 mg/l angereichert werden. Eine Anreicherung auf z.B. 10 mg/l erfordert einen Systemdruck von ca. 6 bar. Dieser Druck ist dann im ganzen System erforderlich.

Um den Meßbereich zu vergrößern bzw. die Konzentration von gelöstem Sauerstoff in leicht faßbaren Größenordnungen zu halten, kann mit ungleichen Teilstromverhältnissen gearbeitet werden.

## Ansprüche

1. Verfahren zum Bestimmen von in Flüssigkeiten gelösten Wasserstoffkonzentrationen,
dadurch gekennzeichnet,
daß der Flüssigkeit ein Teilstrom entnommen und dieser mit einem Sauerstoff enthaltenden Strom gemischt und die Mischung über einen Katalysator (8) geleitet wird, daß die Sauerstoffmenge im Sauerstoffstrom vor der Vermischung und in der Mischung nach dem Katalysator (8) gemessen und aus der Sauerstoffdifferenz der Anteil des gelösten Gases in der Flüssigkeit bestimmt wird.

2. Verfahren nach Anspruch 1,
dadurch gekennzeichnet,
daß der Teilstrom und der Sauerstoffstrom konstant und gleich sind.

3. Verfahren nach Anspruch 1,
dadurch gekennzeichnet,
daß die Sauerstoffkonzentrations-Differenz im Sauerstoffstrom vor der Mischung und in der Mischung hinter dem Katalysator konstant gehalten wird.

4. Verfahren nach Anspruch 3,
dadurch gekennzeichnet,
daß auch der Sauerstoffstrom konstant gehalten wird.

5. Verfahren nach Anspruch 1,
dadurch gekennzeichnet,
daß die Sauerstoffkonzentration hinter dem Katalysator (8) konstant gehalten und die Sauerstoffkonzentration im Sauerstoffstrom dem Wasserstoffgehalt in der Mischung angepaßt wird.

6. Verfahren nach einem der Ansprüche 1 bis 5,
dadurch gekennzeichnet,
daß das System unter einem Druck betrieben wird, bei dem kein Ausgasen gelöster Gase stattfindet.